# EUROPEAN PATENT APPLICATION

(11) **EP 4 442 771 A1**
(43) Date of publication of application: **09.10.2024**
(21) Application number: 23386038.6
(22) Date of filing: 18.05.2023
(51) Int. Cl.: C09D 5/00, C09D 5/16, C09D 7/20, C09D 7/63

(54) **ANTIFOULING AND ANTISTATIC COATINGS THROUGH AUTOMATED APPLICATION**

(30) Priority: 05.04.2023 GR 20230100291
(71) Applicant: PAPADOPOULOS NIKOLAOS-XAFAKIS SOTIRIOS G.P., 11633 Pagrati, Athens (GR)
(72) Inventor: The designation of the inventor has not yet been filed

(57) **Abstract**

The present invention describes a method of developing antifouling and antistatic coatings for solid surfaces in an automated manner. The method concerns formulation of the coating solution and its application in automated surface treatment systems in order to rapidly and economically produce an anti-fouling protective coating, especially on smooth substrates with a high concentration of surface hydroxyls. The coating is applied in two steps. In the first, the coating solution is sprayed on the surface. In the second, the coated surface is dried by means of forced air flow. The coated surfaces exhibit enhanced anti-fouling, anti-static and hydrophobic attributes, attaining their maximum functionality immediately after the drying stage without the need for any additional treatment. The method has industrial applicability, allowing large surfaces to be coated prior to their installation, for example at the stage of processing or assembly of finished products.

## Description

### FIELD OF THE INVENTION

This invention refers to a new method of developing antifouling and antistatic coatings for solid surfaces by automated application. The method describes the formulation of the coating solution and its application in automated surface treatment systems in order to rapidly and economically produce an anti-fouling protective coating suitable for any substrate, especially for smooth substrates having a high concentration of surface hydroxyls.

### BACKGROUND OF THE INVENTION

Common surfaces adsorb various pollutants and contaminants, especially when exposed to outdoor conditions. Depending on the application, the effects of surface fouling vary and may be quite serious, affecting human health, functionality of devices and economic performance of equipment and systems.

Foulants can be either inorganic (e.g., limescale) or organic (e.g., fungi). Surface fouling is usually caused by the accumulation of one of the two types of contamination mentioned above. In some cases, however, such as, for example, in aerosols, fouling may be the result of the simultaneous presence of both contamination types.

Inorganic pollutants and contaminants can be either water-soluble or non-water-soluble. Hence, an aqueous solution wetting a surface, containing dissolved contaminants, contributes to the occurrence of surface contamination as a result of evaporation of the solvent (water). Surface fouling generally occurs through adsorption processes (either physical or chemical) and, in the case of inorganic and organic non-water-soluble contaminants (biofouling, dust, etc.), is the result of weak Van der Waals forces, ionic attractions or charge transfer mechanisms.

Cleaning a contaminated surface with cleaning/disinfectant agents is common practice. Cleaning formulations contain surfactants that remove contaminants or kill micro-organisms, but are often harmful to human health and the environment. Moreover, their use does not act as a deterrent to the recurrence of foulants. Therefore, tackling surface contamination through the application of antifouling and antistatic coatings is as an interesting perspective with multiple implications and a wide range of applications (e.g., shipping, construction, etc.).

Several efforts have been reported [1-30] towards development of antifouling and antistatic coatings for solid, mainly smooth, surfaces, usually by wet chemical routes. Among them, the sol-gel method is the most common, especially on substrates with sufficient concentration of surface hydroxyls [8, 13-15, 16, 29]. Coatings produced by this method acquire their maximum functionality after threating the surface in one or more steps [11], either under standard conditions [7] or after curing at high temperatures [26]. Some systems exhibit sufficient stability during storage, while others, especially 2-component systems [14, 17] require on-site production of the coating solution just prior to application. UV stability, chemical, corrosion and abrasion resistance are key criteria for evaluating the performance of a coating.

Proper substrate preparation is also a necessary condition for the antifouling coating to exhibit increased functionality and for this reason, some patents [5, 12] focus exclusively on this factor. It should be noted though, that substrate preparation and/or activation processes introduce additional processing steps to the coating procedure.

In addition, on a large scale, the process of treating common substrates with antifouling coatings presents several difficulties. The primary reasons are: a) that there is a lack of a suitable method which could be easily and economically applied in an industrial environment and possibly in the existing facilities of an industrial plant without the need to integrate new complex automatic coating application systems and b) that most coating systems have limited applicability.

Regarding the lack of a suitable method for the industry, the low penetration of CVD (chemical vapor deposition) and magnetron sputtering techniques in glass surface treatments, namely easy-to-clean coatings, is indicative. More specifically, CVD yields ultrathin coatings with high mechanical strength, but is necessarily limited to small-scale applications due to the complexity of the process or the use of sophisticated raw materials (e.g., organometallic compounds). Similarly, the magnetron sputtering technique provides flexibility, since the applied coatings can be cured during regular glass tempering steps, however the cost of equipment is high and the performance of the resulting coating is usually unsatisfactory.

As far as the applicability of existing antifouling coating systems is concerned, it is limited due to various factors such as complexity of the application method, length of curing time, high thickness and low transparency of coatings. Additional factors may also be the number of surface treatment steps required prior to coating and the time needed for each one of them, as well as the shelf life of the coating solution during storage. In addition, coating of surfaces (e.g., the glass surfaces of a building) is carried out by manufacturers usually on site, for example during installation of equipment or during execution of the project.

The operating principle of anti-fouling coatings is based on several technologies, including the modification of the surface energy of the substrate and the use of biocides [17, 19-29]. However, most of the time, the produced coatings are unable to combine different functional characteristics, especially in small thicknesses. For example, classical fluoropolymers provide high hydro- and oleo-phobicity, but do not prevent dust accumulation, while self-cleaning coatings based on nanostructured titanium dioxide provide good protection against dust, but their anti-fouling behavior depends on the nature of the contamination.

At the same time, accuracy and speed in the application of the coating are always important prerequisites. The most common technique of coating application on solid surfaces is spraying. Various spraying variations (e.g., HVLP, airless spraying, etc.) are typically employed. However, this can be a user-sensitive technique, while material losses and environmental pollution due to overspraying are often important inhibiting factors, too.

Finally, the toxicity of certain raw materials (e.g., fluoropolymers) used in common anti-fouling coatings is an additional aspect that needs attention.

It is obvious that an anti-fouling coating with enhanced anti-static properties and wide applicability could have a much larger "footprint" in limiting surface contamination than current antifouling and antisoiling coatings. Moreover, its rapid application, in an automated way, in an industrial environment, would allow treatment of surfaces before their installation, e.g., at the stage of processing or assembly of finished products.

### DETAILED DESCRIPTION OF THE INVENTION

The present invention describes a method of developing a coating solution and applying it, via automated surface treatment systems, to a surface in order to rapidly and economically produce ultrathin anti-fouling coatings with enhanced anti-static properties.

The application of the coating is carried out in two stages. In the first stage, the surface is coated by spraying a suitable chemical solution onto it. In the second stage, the coated surface is air dried by large quantities of air produced by fans. Between the two stages there may be a stage of rinsing the coated surface with deionized water. For example, by injecting the coating solution directly into the tanks of vertical industrial glass washing machines, it is possible to produce antifouling and antistatic thin films on large surfaces in an automated way.

The surface must be clean before application and free of films or coatings. Only environmentally friendly raw materials are used in the formulation of the coating solution.

The coating solution is produced by mixing the following components:
(i) an organosilane T with 3 hydrolyzable groups, in particular a cationic derivative of organosilanes with quaternary ammonium salts, of the formula (I):

   (A)₃Si(R¹)-N⁺-R²R³R⁴ Z⁻ (I)

   wherein A is an alkoxide of up to 4 carbon atoms, R¹ is a divalent saturated aliphatic or aromatic hydrocarbon radical of up to 10 carbon atoms, R², R³, hydrogen, or alkyl of up to 8 carbon atoms or aryl of 6 to 10 carbon atoms, R⁴, a saturated or unsaturated hydrocarbon radical having from 1 to 18 carbon atoms, and Z a halogen or carboxyl, or hydroxide, or phosphate, or sulphate, or nitrate, or tosylate radical. The groups R², R³ and R⁴ may be joined together to form heterocyclic compounds.
(ii) an inorganic or organic acid as a catalyst,
(iii) an antifoaming agent S, preferably an alkoxylated fatty alcohol,
(iv) an organic solvent, preferably alcohol,
(iv) deionized water of conductivity less than 10 µS/cm, preferably less than 5 µS/cm.

Preferably, the coating solution is produced in the form of a concentrate, which is then left to age for at least 48 hours at ambient temperature. In this state it is storage stable for at least 1 year. Before application it is diluted with deionized water and/or alcohol to the desired concentration.

The application of the coating solution to a substrate, results in the development of anti-fouling, anti-static and water repellent properties. By anti-fouling properties is meant the ability of the coated surface to prevent the accumulation of contaminants and micro-organisms and to self-disinfect. The same term also means the ability of the coating to exhibit algostatic, bacteriostatic and fungistatic properties. Anti-static properties refer to the ability of the coating to prevent the accumulation of aerosols. Water-repellent properties refer to the ability of the coated surface to exhibit a water contact angle of at least 80°.

The coating solution is suitable for use in automated application equipment and systems which have at least one spray system. Ideally, the coating shall be applied by the rotary motion of fixed circular discs in contact with the surface. During application, the surface should be preferably moved at a constant, low speed in order to achieve a uniform deposition and to avoid the formation of localized spots of coating material excess. After application, the coated surface can be wetted with water, as this accelerates the polycondensation reactions of the silanes with the substrate.

Immediately thereafter, it should be in contact with an air stream in order to dry instantaneously. Ideally, both wetting with water and air drying should occur in the above order.

Suitable automated coating application systems may be, for example, the vertical industrial glass washing machines. These are designed to wash large glass surfaces (e.g., having dimensions of up to 3.5 m x 9 m), while moving them in one direction via a conveyor system with cylindrical rollers. The latter guide the glass pane from the entry area to the main body of the washing machine where distilled water or a cleaning solution is sprayed and the surface is washed by special brushes placed on either side of it and facing each other. A common arrangement is 6 brushes arranged in three 2-way groups in the direction of movement of the glass pane. The latter moves, for example, from left to right, at a constant speed, e.g., 10 m/min, among the brushes, which rotate at a specific speed. In some cases, in order to wash sensitive surfaces evenly, washing machines are equipped with synchronization systems for precise control of the speed of rotation of the brushes. The minimum permissible size of the glass pane in vertical washing machines is usually in the order of 15 cm x 35 cm, while its thickness may vary between, for example, 3 mm and 100 mm. It is obvious that the variation in the dimensions and thickness of the glass panes can be quite wide, which means that it is possible to wash both small and thin surfaces as well as thick and large surfaces with the same system. Most of the vertical glass washing machines have at least two metal (e.g. made of steel) tanks. The first tank (pre-wash tank) is filled with deionized water or a cleaning solution/detergent/descaler for the pre-washing of the glass pane (e.g., from dust, limescale, fingerprints, etc.). The second tank (washing tank) is filled with deionized water or a cleaning solution for the main washing process of the glass pane. Subsequently after the washing step, and as the glass pane continues to move in the same direction and at the same speed, it enters the section of the washing machine where surface drying takes place by means of forced air flow produced from specially designed fans. Finally, by means of the same conveyor system, the glass pane is conveyed to the exit of the washing machine, where it is received in a clean and dry state, suitable for further processing (cutting, assembly, etc.).

It was unexpectedly found that if the aforementioned coating solution was used instead of the conventional prewashing solution and that if distilled (or deionized) water was used instead of the conventional washing solution, the coating was rapidly applied to the glass pane with excellent results. The coated surface became strongly hydrophobic with a water contact angle of at least 96⁰ and prevented the accumulation of fine dust, dirt, lime and bacteria.

It was also unexpectedly found that the coating was applied with very good results even when distilled water was not used in the washing tank, in which case it was either left empty or filled with the same coating solution used in the pre-washing tank. In this case, however, the coating became functional after a short delay.

Surprisingly, it was also demonstrated that the coated surface after the drying stage came out of the washing machine completely clean and dry, without residues and without requiring any additional treatment (e.g., heating for a certain period of time or removal of excess material by polishing the surface) in order for the coating to become fully functional. This finding was attributed to (a) the simultaneous transverse rotational movement of the brushes and longitudinal movement of the surface, and (b) the instantaneous drying of the coating through the introduction of high volumes of air. More specifically, the brushes exerted normal stress to the surface. Their simultaneous rotation forced the coating material to penetrate into the micro-pores of the glass. During movement of the glass pane, shear stresses were also exerted at the brush-substrate interface, which had a drastic effect on the smoothing of the developed film. In addition, forced air flow accelerated the completion of the reactions and the adhesion of the developed film, because the polycondensation reactions among the hydrolyzed silanes, whose formation was favored in the prewashing stage, were facilitated, as the water produced was expelled much more rapidly. In other words, the transformation of the hydrogen bonds formed between the hydrolytically deposited silanes and the substrate silanols into stable terminal siloxane bonds was massively favored due to the rapid removal of the produced water:

R-Si-OH + Si-OH-> R-Si-O-Si + H₂O ↑, R: organo-functional group.

The result was the development of a compact, sub-micron-sized film, which adhered strongly to the surface, permanently modifying its properties. It is evident that the above mechanism is strongly favored on substrates with a high concentration of surface hydroxyls.

It should be noted that in some industrial washing machines, prewashing may be carried out in two stages and therefore, the total number of tanks used may be three. In this case, the coating solution is placed in the first two. The third, i.e., the washing tank, should ideally (but not necessarily) be filled with deionized water to remove excess coating material.

The pre-wash and wash tanks shall be hermetically sealed to prevent evaporation losses, either during operation or during system inactivity.

Surprisingly, it was found that the coating solution does not become contaminated over time and that it retains its activity even after repeated applications on large surfaces, as well as after prolonged periods of system inactivity. It was also found that the coating solution helps to clean the substrate when the latter is not completely clean before application, but its contamination during repeated applications on non-clean substrates is likely to reduce its effectiveness over time.

The concentration of organosilane in the coating solution is between 0.0007% and 5% w/w, preferably between 0.01% and 1% w/w, more preferably between 0.04% and 0.4%. Also, the ratio of weights between the silane and the antifoaming agent is from 1:1 to 1:500, preferably from 1:1 to 1:50, more preferably from 1:1 to 1:5.

The antifoaming agent prevents the intense foaming of the coating solution during operation of the automated system. It also reduces the surface tension of the coating solution. Suitable antifoaming agents are, for example, polydimethylsiloxanes and silicone derivatives, as well as certain alkoxylated fatty alcohols, preferably those consisting of 8 to 20 carbon atoms.

The coating solution is water based. Deionized water with a conductivity of less than 10 µS/cm, preferably less than 5 µS/cm, should be used. Care should also be taken to minimize contamination of the coating solution during operation of the system and to ensure that its conductivity does not dramatically increase, in order to maintain a consistent quality in the final product.

The catalyst can be an inorganic or organic acid. Acetic acid is particularly advantageous.

The organic solvent improves the wetting of low surface energy substrates, increases the lubricity of the coating solution and accelerates its evaporation. It should be used at a rate so that the flash point of the coating solution is less than 60 °C. Among organic solvents, lower monohydric alcohols appear particularly advantageous, especially at concentrations of less than 10% w/w, preferably less than 5% w/w.

The preparation of the coating solution takes place by mixing the various components in appropriate tanks or reactors. The water is introduced first, followed by the catalyst and the organic solvent. This is followed by the gradual (e.g., within 10 minutes) addition of the organosilane and finally, of the antifoaming agent, under continuous, mild stirring. The solution is ready for use almost immediately after mixing and has a shelf life of at least two years. It is produced in the form of a concentrate, from which, by appropriate dilution (e.g., in a weight ratio of 1:19) with deionized water, the ready-to-use coating solution is directly obtained.

Additionally, the coating solution may contain preservatives, wetting agents, additives, surfactants, etc., without its functionality and applicability being compromised. It may even be used as an additive, e.g., for the development of antifouling marine paints. It can also be used with any automatically controlled coating application system whose operating principle is based on a similar principle, such as a surface cleaning facility or device. With the necessary modifications, suitable systems may also include robots for cleaning ship reefs, which move along the surface while remaining firmly attached to it by means of magnets. The robot can be moved in any direction while applying the coating by the use of integrated brushes and spray nozzles.

The above coating solution is suitable for any solid substrate, especially for large, smooth, hydroxylated substrates, and has industrial applicability because it allows rapid coating of the surface in an economical manner.

### References

### US Patents:

**1.** (2011/0094417 A1) Hydrophobic self-cleaning coating solutions.
**2.** (1984/3,579,540 B1) Method for protecting nonporous substrates and for rendering them water repellant.
**3.** (2012/8,338,351 B2) Coating compositions for producing transparent super-hydrophobic surfaces.
**4.** (2003/6,511,753 B1) Process for producing article coated with water-repellent film. Article coated with water-repellent film and liquid composition for water-repellent film, article coated.
**5.** (1999/5,980,990) Water repellent surface treatment with acid activation.
**6.** (2012/8,258,206 B2) Hydrophobic coating compositions for drag reduction.
**7.** (2013/0109261 A1) Coating systems capable of forming ambiently cured highly durable hydrophobic coatings on substrates.
**8.** (2002/6,461,537 B1) Water repellent glass treatment for automotive applications.
**9.** (2004/0209072 A1) Cleaning-friendly apparatus with an easily cleanable, heat resistant surface coating.
**10.** (2004/0053058 A1) Water-repellent film-coated articles, water-repellent film-coating liquid composition and process for preparation of water-repellent film-coated articles.
**11.** (2001/6,245,387 B1) Capped silicone film and method of manufacture thereof.
**12.** (2000/6,025,025) Water-repellent surface treatment.
**13.** (1999/5,889,086) Water repellent for automobile window glass.
**14.** (2005/0004264 A1) Two-pack type water repellent for glass surface.
**15.** (2011/7,919,147 B2) Coating method.
**16.** (2007/0027232 A1) Coating compositions incorporating nanotechnology and methods for making same.
**17.** (2003/6,630,205 B2) Self-crosslinking compositions based on fluorine-containing polycondensates.
**18.** (2003/6,548,116 B2) Method for manufacturing a chemically adsorbed film and a chemical adsorbent solution for the method.
**19.** (2015/9,011,890 B2) Antibacterial sol-gel coating solution.
**20.** (2015/9,210,934 B2) Surface coating.
**21.** (2017/0150723 A1) Methods of preparing self-decontaminating surfaces using reactive silanes, triethanolamine and titanium anatase sol.
**22.** (2017/9,631,118 B2) Anti-bacterial and anti-fingerprint coating composition, film comprising the same, method of coating the same and article coated with the same.
**23.** (2015/0225572 A1) High performance antimicrobial coating.
**24.** (2014/095299 A1) Composition for hydrophobic coating.
   **WO Pat.:**
**25.** (2016/043584 A1) Method for providing a substrate with an antimicrobial coating, and coated substrates obtainable thereby.
**26.** (2018/231437 A1) Anti-microbial coating materials.
**27.** (2014/095299 A1) Composition for hydrophobic coating.
**28.** (2003/014232 A1) Material for producing abrasion-proof, hydrophobic and/or oleophobic coatings.
   **Eur. Pat.:**
**29.** (2005/EP 1 555 249 A1) Hydrophobic and/or oleophobic coating on microstructured glass surfaces providing an anti-fingerprint effect.
**30.** (2011/EP2294153A1) Coating composition and process for preparing it.

## Claims

1. A method for the development of antifouling and antistatic coatings through automated surface treatment systems, comprising:
a) a first step of coating the surface with a chemical solution containing:
i) an organosilane T having 3 hydrolysable groups, at an amount of 0.0007% to 5% by weight, preferably between 0.01% and 1% w/w, even more preferably between 0.04% and 0.4% w/w;
ii) an acid as catalyst, preferably acetic acid;
iii) an antifoaming agent (S), preferably an alkoxylated fatty alcohol having 8 to 20 carbon atoms;
iv) organic solvent, preferably lower monohydric alcohol, at an amount of up to 10% w/w, preferably up to 5% w/w;
v) deionized water with a conductivity of less than 10 µS/cm, preferably less than 5 µS/cm;
b) a second stage of drying of the coated surface, with air flow.

2. The method according to claim 1, wherein said organosilane T is selected from a group of cationic organosilane derivatives with quaternary ammonium salts, of the formula (I):
(A)₃Si(R¹)-N⁺-R²R³R⁴ Z⁻ (I)
where A is an alkoxide having up to 4 carbon atoms, R¹ is a divalent saturated aliphatic or aromatic hydrocarbon radical having up to 10 carbon atoms, R² and R³ are independently a hydrogen or an alkyl radical having up to 8 carbon atoms or an aryl radical having from 6 to 10 carbon atoms, R⁴ is a saturated or unsaturated hydrocarbon radical having from 1 to 18 carbon atoms, and Z is a halogen or carboxyl, or hydroxide, or phosphate, or sulphate, or nitrate, or tosylate radical. The groups R², R³ and R⁴ may be joined together to form heterocyclic compounds.

3. The method according to claim 1, wherein the ratio of weights between said organosilane T and said antifoaming agent S is from 1:1 to 1:500, preferably from 1:1 to 1:50, more preferably from 1:1 to 1:5.

4. The method according to claim 1, wherein said chemical coating solution has a pH between about 3 and about 7, preferably between about 4 and about 6.5, more preferably between about 5 and about 6.

5. The method according to claim 1, wherein said chemical coating solution has a flash point of less than 60 °C.

6. The method according to claim 1, wherein said chemical coating solution is fed into at least one tank of an industrial glass washing machine.
